# EUROPEAN PATENT APPLICATION

(11) **EP 1 617 403 A1**
(43) Date of publication of application: **18.01.2006**
(21) Application number: 04728896.4
(22) Date of filing: 22.04.2004
(51) Int. Cl.: G09G 5/00, G09G 3/20, G09G 3/36, G06F 3/14, G06T 3/40, H04N 1/393

(54) **DISPLAY PROCESSING METHOD AND DISPLAY PROCESSING DEVICE**

(30) Priority: 23.04.2003 JP 2003117993
(71) Applicant: Vodafone K.K., Minato-ku, Tokyo 1056205 (JP)
(72) Inventor: WATANABE, Norioki, Tokyo 1056205 (JP)
(74) Representative: Grünecker, Kinkeldey, Stockmair & Schwanhäusser Anwaltssozietät
(86) International application number: PCT/JP2004/005759
(87) International publication number: WO 2004/095412

(57) **Abstract**

The determination means 21 read out the condition of the number of pixels, wherein the number is necessary when the application is executed and the condition being described at the predetermined position of the application file stored in the storage device 23. Subsequently, the determination means 21 determines the operation display mode among at least one of the display mode candidates having different magnification ratios including equal ratio, depending on the condition of the number of pixels for the application being operated on a display screen. Then, the display control means 25 displays the content image designated by the application in the determined operation display mode on a display means 13. As a result, the content can be displayed in an appropriate form, being adapted to the display means.

## Description

### TECHNICAL FIELD

The present invention relates to a display processing method and display processing apparatus. More particularly, it relates to a display processing method and display processing apparatus, which execute display processing for a display means in which pixels are arrayed in a matrix along with the row direction and column direction.

### BACKGROUND ART

In mobile communication terminal apparatuses such as a cellular phone, application files containing contents, for example, a game file, is downloaded for providing them to the operator of the apparatus. When these contents are expected to be displayed on a screen, the content is provided for operators by using the display screen of a display means such as a liquid crystal display in the display unit of the mobile communication terminal.

The content is created by content providers in the form that matches to the pixel configuration of the display screen of the mobile communication terminal apparatus for displaying the content. Nowadays, an enormous number of contents are created and distributed and they are becoming public property.

In a recent few years, size of pixels composed of a display screen in a display means such as a liquid crystal display rapidly becomes fine. As a result, the total number of pixels is increasing while the display screen size is kept almost unchanged. For example, conventionally, a display screen includes 120 pixels in the row direction and 130 pixels in the column direction (i.e., the pixel configuration is 120 × 130). Today, the total number of pixels is increasing to 240 in the row direction and 260 in the column direction (i.e., the pixel configuration is 240 × 260).

By changing of the pixel configuration for the display screen to that having a higher resolution and a larger number of pixels, the displayed area of the content, of which size fits for a conventional display screen, is smaller on the new display screen than the conventional one. For the above-mentioned example, the display area size decreases to 1/4, when the content created for the display screen having the pixel configuration of 120 × 130 is displayed on the display screen, the total area size of which is the same as that of 120 × 130, but the pixel configuration is different, 240 × 260.

Consequently, it is predictable to often occur the problem that the same visibility of the content on the newly changed display screen cannot be ensured when the content created so as to fit the conventional size display. In order to avoid for decreasing of the visibility, there are choices that the content is newly reformed so as to fit the changed size display screen. However, to reform entire of the enormous number of the content, which has already become a public property cost and waste labors.

The present invention has been made in consideration of the above situations. The object of the present invention is to provide a display processing method and display processing apparatus, which is capable of displaying the content in an appropriate form, being fitted it to the display means.

### DISCLOSURE OF INVENTION

According to the first aspect of the present invention, the present invention is the display processing method executing display processing for display means in which pixels are arrayed in a matrix along a row direction and column direction, comprising steps of: reading out a condition of the number of pixels for an application being operated on a display screen, the number being necessary when an application is executed and the condition being described at a predetermined position of an application file; determining an operation display mode among at least one display mode candidate having different magnification ratios including equal ratio, depending on the condition of the number of pixels; and displaying an image designated by the application on the display means, by using the operation display mode.

In this display processing method, the condition of the number of pixels for the application being operated in the display screen is read out in the condition read out step, wherein the number is necessary when the application is executed and the condition being described at the predetermined position of the application file stored in the storage device and so forth. Subsequently, in the determination step, the operation display mode is determined among at least one of the display mode candidates having different magnification ratios including equal ratio, depending on the condition of the number of pixels for the application being operated on a display screen. The operation display mode is determined in consideration of the priority of the operation display mode, which is expressed by, for example, the designation form of the condition of the number of pixels for the application being operated on a display screen.

Then, in the display step, the image designated by the application is displayed on the display means by using the determined operation display mode. As a result, the content is displayed on the display means in an appropriate form, satisfying the condition of the number of pixels for the application so as to be operated on a display screen.

Accordingly, the display processing method of the present invention makes the content display in the appropriate form possible, fitting to the display means.

In the display processing method of the present invention, the magnification ratio may be equal in both of the directions, the row direction and the column direction. In this case, the displayed content is always equal or similar to the created content; therefore, the right of integrity, one of copyrights, held by the content's creator is automatically abided in principle, no permission from the creator need be taken into consideration, when the content is displayed in the different form from its original one.

In the display processing method of the present invention, the condition of the number of pixels for the application being operated on the display screen may contain both of the row pixel count condition and the column pixel count condition. The row pixel count condition is referred to as the condition of the number of pixels in the row direction, and the column pixel count condition is referred to as the condition of the number of pixels in the column direction.

Wherein, the row pixel count condition may be designated by one of the pixel count and the pixel count range in the row direction, as well as the column pixel count condition may be designated by that in the column direction. In either of the condition, the application is operated.

When both of the row pixel count condition and the column pixel count condition are respectively designated by the pixel count in the determination step, a display mode candidate may be chosen from the group of the at least one of the display mode candidates to be determined as the operation display mode, wherein the chosen candidate is adaptable to the pixel count designation, and have the highest magnification ratio.

In this case, the visibility of the displayed content may be properly ensured.

On the other hand, the display mode having the lowest magnification ratio is determined as the operation display mode in the determination step, when at least one of the row pixel count condition and the column pixel count condition is designated by the pixel count range. One display mode may be chosen from those candidates belonged to the group of the at least one of the display mode candidates to be determined as the display mode; wherein the chosen candidate is adaptable to the pixel count range designation, and have the lowest magnification ratio.

Thus, a variety of display forms may be chosen, depending on determination algorithms for the display mode. The algorithm is different from when both of the conditions, the row pixel count condition and column pixel count condition, are designated by using the pixel count, and when either of the condition is designated by the pixel count range.

Alternatively, the display processing method of the present invention may further comprise the reception step for receiving the application file. In this case, a variety of contents, which is contained in various application files received in the reception step, may be displayed in an appropriate form, matching them to the display means.

According to the second aspect of the present invention, the present invention is a display processing apparatus comprising: display means in which pixels are arrayed in a matrix along with a row direction and column direction; determination means for determining an operation display mode among at least one of display mode candidates having different magnification ratios including equal ratio, depending on the condition of the number of pixel for the application being operated is read out, the number being necessary when the application is executed, the condition being described at a predetermined position of an application file; and display device control means for displaying an image designated by the application on the display means, by using the operation display mode for the application being operated on a display screen.

In the display processing apparatus, the determination means reads out the condition of the number of pixels, which is described at the predetermined position of the application file stored in the storage device and so forth. Subsequently, the determination means determines the operation display mode from the group of the at least one display mode candidates having different magnifications ration including equal, depending on the condition of the number of pixels. Then, the display control means displays the image on the display means in the determined operation display mode, wherein the image is designated by the application.

That is, the display processing apparatus of the present invention performs display processing by using the above-described display processing method of the present invention. Hence, according to the display processing method of the present invention, the content may be displayed in the appropriate form, being matched to the display means.

In the display processing apparatus of the present invention, the determination means determines one display mode candidate having the highest magnification ratio among the group of the at least one of the display mode candidates, which is adaptable to the pixel count designations, as the operation display mode, when the conditions are designated as follows: the row pixel count condition is designated by the pixel count in the row direction, and the column pixel count condition is designated by a pixel count in the column direction; wherein the row pixel count condition showing the condition of the number of pixels per length in the row direction, and the column pixel count condition showing the number of pixels per length of the column direction, and the application can be operated in both of the conditions. In this case, the visibility of the displayed content may be properly ensured.

On the other hand, the display mode candidate having the lowest magnification ratio is determined as the operation display mode among the group of the at least one of the display mode candidates, which is adaptable to the pixel count designation, when the following conditions are designated as follows: at least one of the row pixel count condition and the column pixel count condition is designated by a pixel count range, wherein the row pixel count condition showing the condition of the number of pixels per length of the row direction and the column pixel count condition showing the condition of the number of pixels per length of the column direction, and the application can be operated in both of the conditions.

Thus, a variety of display forms may be chosen, depending on determination algorithms for the display mode. The algorithm is different from when both of the conditions are designated by using the pixel count, and when either of the condition is designated by the pixel count range.

The display processing apparatus of the present invention may further comprise a reception means for receiving the application file. In this case, a variety of the contents contained in a variety of application files received by the reception means may be displayed in the appropriate form, being fitted to the display means.

Alternatively, the reception means may comprise wireless communication means for executing wireless communication with a base station for a mobile communication network. In this case, the display method of the present invention may be used in a mobile communication terminal device, which executes wireless communication with the base station of the mobile communication network.

As described above, according to the display processing method of the present invention, the content may be displayed in the appropriate form, being matched to the display means.

Also, the display processing apparatus of the present invention performs the display processing method of the present invention. Therefore, according to the display processing apparatus of the present invention, the content may be displayed in the appropriate form, being adapted to the display means.

### BRIEF DESCRIPTION OF THE DRAWINGS

Figs. 1A and 1B are views showing the outer appearance of a cellular phone using an information processing method according to an embodiment of the present invention;
Fig. 2 is a functional block diagram of the cellular phone shown in Fig. 1;
Fig. 3 is a view for explaining the pixel configuration of the display unit shown in Fig. 1;
Figs. 4A and 4B are views for explaining the equal ratio display mode;
Figs. 5A and 5B are views for explaining two times magnified ratio display mode;
Fig. 6 is a flowchart for explaining display processing by the apparatus shown in Fig. 1;
Fig. 7 is a flowchart for explaining fixed value designation processing in Fig. 6;
Fig. 8 is a flowchart for explaining range designation processing in Fig. 6;
Fig. 9 is a flowchart for explaining range designation processing No. 1 in Fig. 8;
Fig. 10 is a flowchart for explaining range designation processing No. 2 in Fig. 8; and
Fig. 11 is a flowchart for explaining range designation processing 3 in Fig. 8.

### BEST MODE FOR CARRYING OUT THE INVENTION

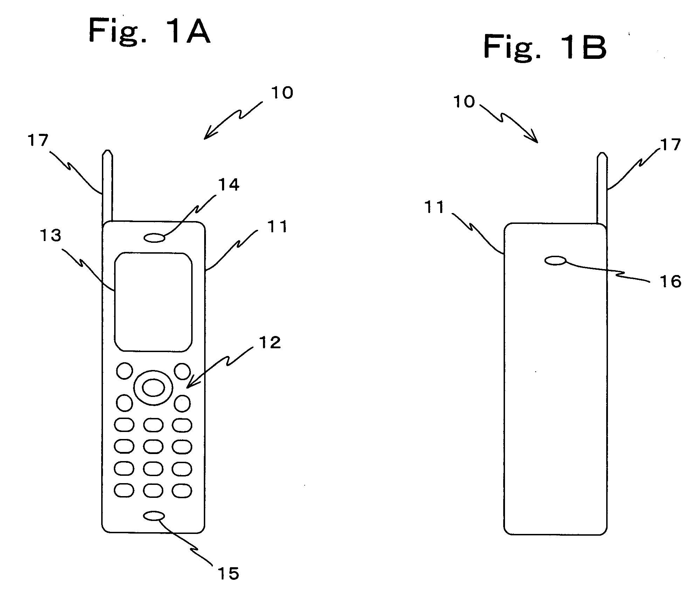

An embodiment of the present invention will be described below with reference to Figs. 1 to 11. The same reference numerals denote the same or similar elements throughout the drawings, and a repetitive description thereof will be omitted.

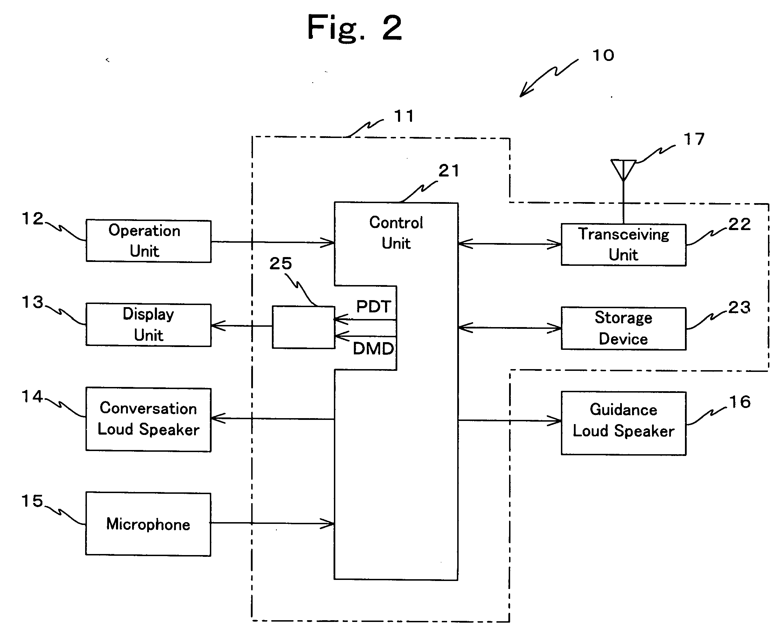

Referring Figs. 1 and 2, it is schematically illustrated that the arrangements of the cellular phone 10 to which an information processing method according to an embodiment is applied. Fig. 1A is a front view of the outer appearance of the cellular phone 10. Fig. 1B is a rear view of the outer appearance of the cellular phone 10. In Fig. 2, a functional block diagram for the cellular phone 10 is shown.

As comprehensively shown in Figs. 1 and 2, the cellular phone 10 comprises (a) the cellular phone main body 11 having the control unit 21, the transceiving unit 22, the storage device 23, and the display control unit 25, (b) the operation unit 12 having a ten-key pad to input a telephone number to the control unit 21 and function keys to input various kinds of instructions, for example, operation mode switching to the control unit 21, and (c) the display unit 13 having the liquid crystal display device to display the operation guide, operation status, and received message in accordance with the instruction from the control unit 21. The cellular phone 10 also comprises (d) the conversation loud speaker 14 which reproduces a voice signal sent from a communication partner in speech communication and the microphone 15 for inputting speech during conversation, (e) the guidance loudspeaker 16 to generate a ringing tone or guidance sound in accordance with instructions from the control unit 21, and (f) the antenna 17 which is connected to the transceiving unit 22 to transceive a radio signal with a base station for the mobile communication network.

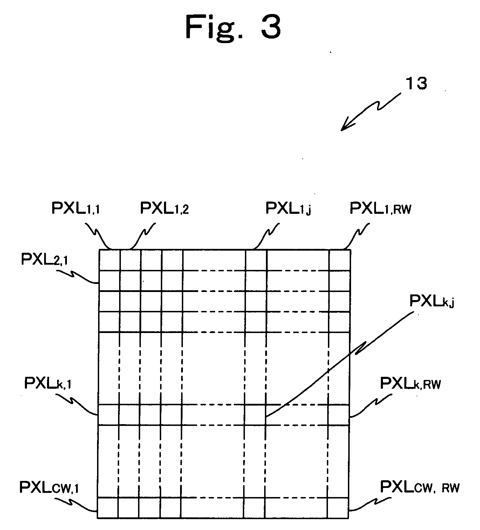

As shown in Fig. 3, in the display screen of the display unit 13, pixels PXL_{k, j} are arrayed in the matrix including RW (e.g., RW = 240) pixels PXL_{k, j} (i.e., j = 1 to RW) in the row direction and CW (e.g., CW = 260) pixels PXL_{k, j} (i.e., k = 1 to CW) in the column direction. That is, the pixel configuration of the display screen of the display unit 13 is (RW × CW).

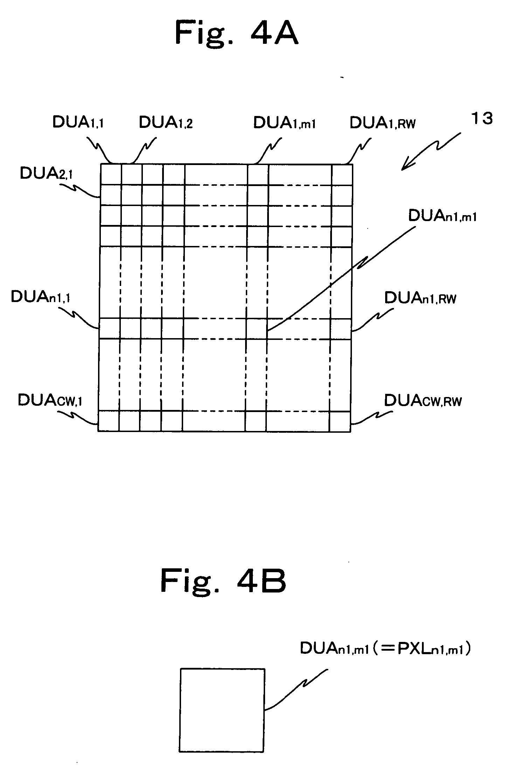

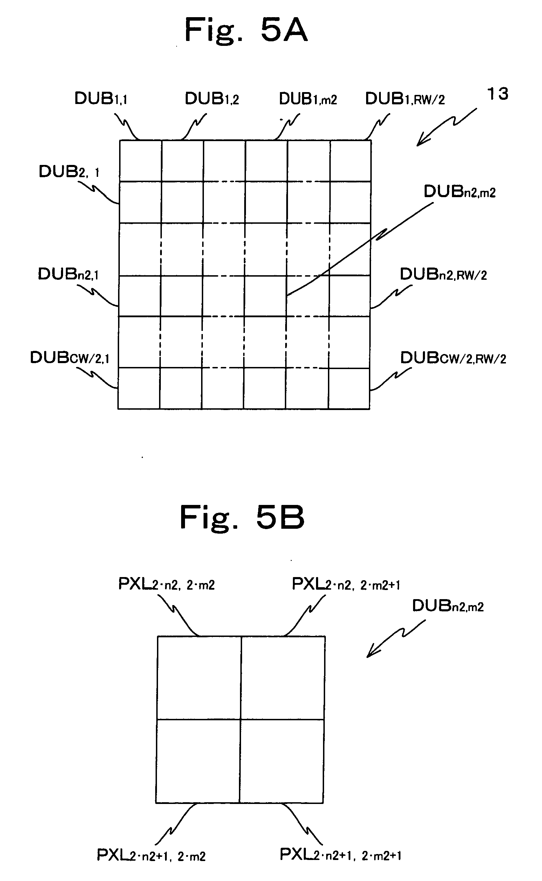

The display control unit 25 displays the content on the display screen by using either mode of two display modes, i.e., the equal ratio display mode shown in Fig. 4 or the two times magnified ratio display mode shown in Fig. 5, depending on the operation display mode instruction DMD from the control unit 21. That is, the display control unit 25 displays by using one pixel PXL_{n1, m1} as the display unit DUA_{n1, m1} (m₁ = 1 to RW, n₁ = 1 to CW), when the equal ratio display mode is designated by the operation display mode instruction DMD from the control unit 21, as comprehensively shown in Figs. 4A and 4B. The display unit DUA_{n1, m1} (m₁ = 1 to RW, n₁ = 1 to CW) corresponds to one pixel of the content, and it is composed of pixel PXL_{n1, m1}.

On the other hand, , the display control unit 25 executes display by using four pixels as display unit DUB_{n2, m2} (m₂ = 1 to RW/2, n₂ = 1 to CW/2), when the two times magnified ratio display mode is designated by the operation display mode instruction DMD from the control unit 21, as comprehensively shown in Figs. 5A and 5B. The display unit DUB_{n2, m2} (m₂ = 1 to RW/2, n₂ = 1 to CW/2) corresponds to one pixel of the content, and it is composed of two pixels in the row direction and two pixels in the column direction. That is, the control unit 25 performs the display by using four pixels PXL_{2.n2, 2.m2}, PXL_{2.n2, 2.m2+1}, PXL_{2.n2+1, 2.m2}, and PXL_{2.n2+1, 2.m2+1} as the display unit DUB_{n2,m2}.

Referring back to Fig. 2, the control unit 21 comprises a central processing unit (CPU), a digital signal processor (DSP), a random access memory (RAM), and a read only memory (ROM). In order to provide general cellular phone functions, the control unit 21 processes various types of data and controls operations of other components described above. Also, the control unit 21 determines one of the operation display modes selected from the group consisting of the equal ratio display mode and the two times magnified ratio display mode, depending on the condition of the number of pixels received through the antenna 17 and transceiving unit 22. The condition is described at the predetermined position of the application file and necessary in executing the application. Then, the control unit 21 notifies the display control unit 25 that either mode is determined as the operation display mode instruction DMD. The control unit 21 also executes the application and supplies original pixel data PDT composing the content to the display control unit 25 as needed.

Note that the display processing apparatus comprises the control unit 21, the antenna 17, the transceiving unit 22, the display control unit 25, and the display unit 13.

Next, the content display processing by using the cellular phone 10 with the above arrangement will be described.

Assume that the application file received through the antenna 17 and the transceiving unit 22 comprises the content. The application file is the file of an MIDP (Mobile Information Device Profile) application. The condition of the number of pixels for the application to be operated on the display screen, which is necessary in executing the application, is described as the pixel count condition parameter in JAD (JAVA (registered trademark) Application Description) file in the application file.

The pixel count condition parameter is described as MAR (MIDlet-Application-Range) attribute in the JAD file and contains row-direction parameters and column-direction parameters. The row-direction parameter is designated by using pixel counts (fixed value) or pixel count ranges (minimum value - maximum value) in the row direction, which is necessary for the display unit 13 when the application is operated. The column-direction parameter is designated by using the pixel counts (fixed value) or the pixel count ranges (minimum value - maximum value) in the column direction, which is necessary for the display unit 13 when the application is operated. Note that the display unit 13 matches to the application when the following cases: in pixel count designation, when the number of row pixels or the number of column pixels is equal to or larger than the designated image count; and in pixel count range designation, when the number of row pixels or the number of column pixels is equal to or less than the designated pixel count.

Note that the row-direction parameter designated by a fixed value is referred to as the "row-direction parameter RF"; and the row-direction parameter designated by the range is referred to as the "row-direction parameter RR (RR1, RR2)" (RR1: minimum value, RR2: maximum value), in the following description. Furthermore, both row-direction parameters are summarily referred to as the "row-direction parameter RP".

Alternatively, the column-direction parameter designated by the fixed value is referred to as the "column-direction parameter CF". The column-direction parameter designated by the range is referred to as the "column-direction parameter CR (CR1, CR2)" (CR1: minimum value, CR2: maximum value). Both column-direction parameters are summarily referred to as the "column-direction parameter RP".

A pixel count condition parameter is summarily referred to as the pixel count condition parameter [RP, CP].

The cellular phone 10 executes processing from application reception to content display in the following way.

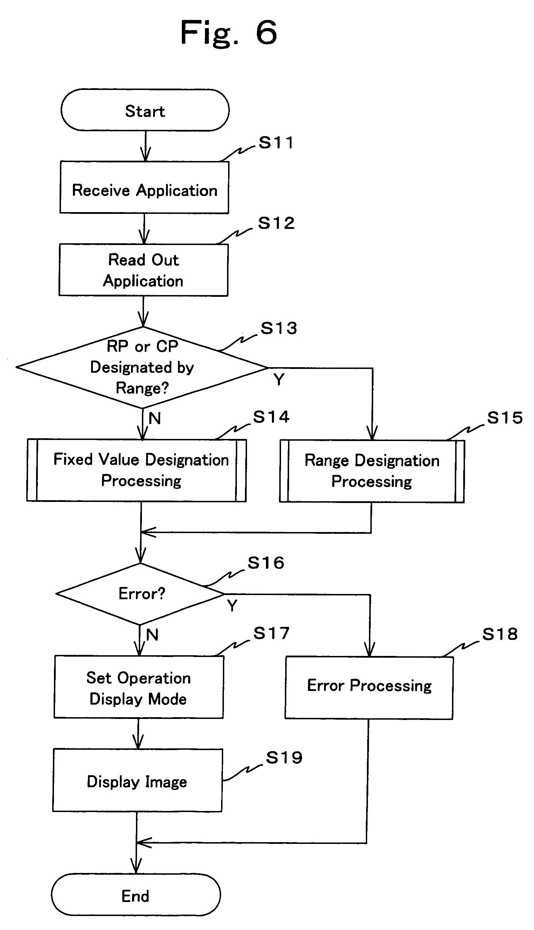

At first, in step S11 in Fig. 6, the transceiving unit 22 receives the application file transmitted from the base station through the antenna 17. The transceiving unit 22 transmits the received application to the control unit 21. Then, the control unit 21 stores the received application in the storage device 23.

The operator operates the operation unit 12 to instruct the control unit 21 to execute the application. In step S12, the control unit 21 reads out the application file comprising the pixel count parameter [RP, CP] from the storage device 23. In step S12, an error flag (to be described later) is reset to OFF.

Subsequently, in step S13, the control unit 21 determines whether the row-direction parameter RP or column-direction parameter CP is the designated by a range or not. If the determination is negative, namely, when both of the row-direction parameter RP and the column-direction parameter CP are designated by fixed values, and they are the row-direction parameter RF and column-direction parameter CF, the flow advances to subroutine S14.

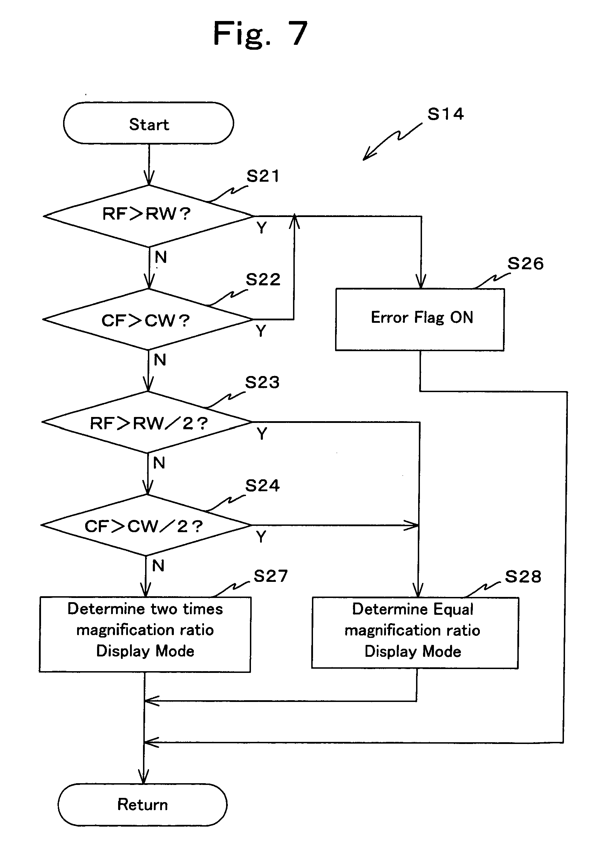

In subroutine S14, firstly, the control unit 21 determines whether the row-direction parameter RF is larger than the row-direction pixel count RW or not in step S21 shown in Fig. 7. This means the control unit 21 determines whether the application requires a display capability beyond that of the display unit 17 from the viewpoint of the pixel configuration in the row direction. If the determination is affirmative, the flow advances to step S26. In step S26, the control unit 21 sets the error flag to ON, and the processing of subroutine S14 is terminated.

If the determination is negative in step S21, the flow advances to step S22. In step S22, the control unit 21 determines whether the column-direction parameter CF is larger than the column-direction pixel count CW, namely, whether the application requires the display capability beyond that of the display unit 17 from the viewpoint of the pixel configuration in the column direction. If the determination is affirmative, the flow advances to step S26. In step S26, the control unit 21 sets the error flag to ON, and the processing of subroutine S14 is terminated.

If the determination in step S22 is negative, it is determined that the pixel configuration of the display unit 13 matches to the pixel count condition parameter [RF, CF], and the flow advances to step S23. In step S23, the control unit 21 determines whether the row-direction parameter RF is larger than half of the row-direction pixel count RW. This determines whether equal ratio display mode is solely possible or not between the above-described equal ratio display mode and two times magnified ratio display mode by the display control unit 25. If the determination is affirmative, the flow advances to step S28. In step S28, the control unit 21 determines the equal ratio display mode as the operation display mode, and the flow in subroutine S14 is terminated.

If the determination in step S23 is negative, the flow advances to step S24. In step S23, the control unit 21 determines whether the column-direction parameter CF is larger than half of the column-direction pixel count CW. This determines whether the equal ratio display mode is solely possible or not. If the determination is affirmative, the flow advances to step S28. In step S28, the control unit 21 determines the equal ratio mode as the operation display mode, and the processing of subroutine S14 is terminated.

If determination in step S24 is negative, the flow advances to step S27. In step S27, the control unit 21 determines the two times magnified ratio display mode as the operation display mode, and the processing of subroutine S14 is terminated.

Referring back to Fig. 6, if the determination in step S13 is affirmative, namely, when at least one of the row-direction parameter RP and column-direction parameter CP is designated by the range, the flow advances to subroutine S15.

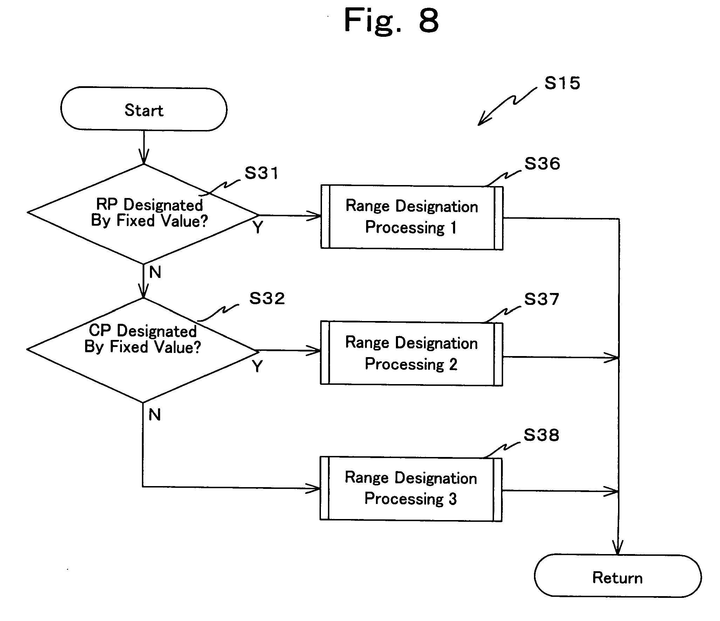

In subroutine S15, firstly, the control unit 21 determines whether the row-direction parameter is designated by the fixed value, namely, whether the pixel count condition parameter [RP, CR] is the pixel count condition parameter [RF, CR, (CR1, CR2)] in step S31 shown in Fig. 8. If the determination is affirmative, the flow advances to subroutine S36.

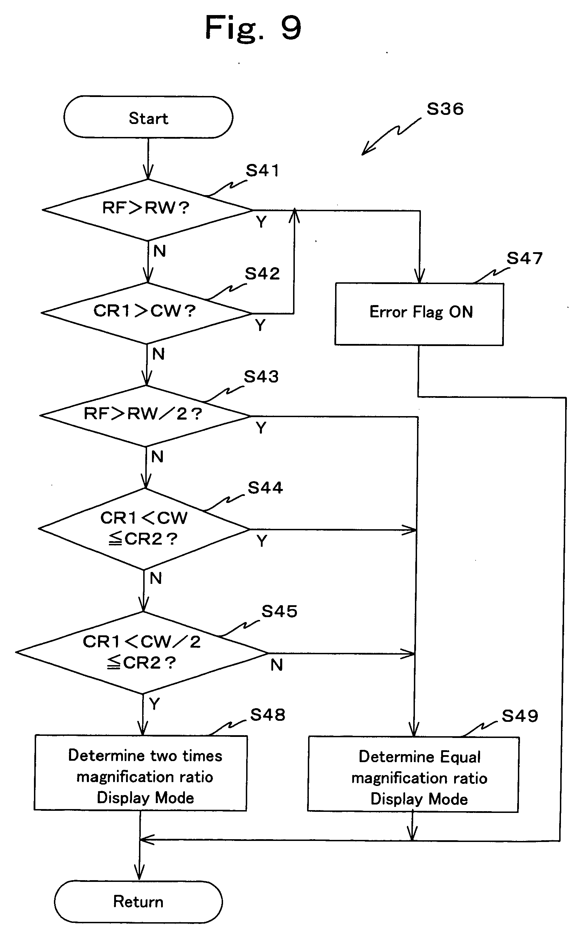

In subroutine S36, firstly, the control unit 21 determines whether the row-direction parameter RF is larger than the row-direction pixel count RW, namely, whether the application requires the display capability beyond that of the display unit 17 from the viewpoint of the pixel configuration in the row direction in step S41 shown in Fig. 9. If the determination is affirmative, the flow advances to step S47. In step S47, the control unit 21 sets the error flag to ON, the flow in subroutine S36 is terminated, and the processing of subroutine S15 is terminated.

If the determination in step S41 is negative, the flow advances to step S42. In step S42, the control unit 21 determines whether the minimum value CR1 of the column-direction parameter is larger than the column-direction pixel count CW. This determines whether the application requires a display capability beyond that of the display unit 17 from the viewpoint of the pixel configuration in the column direction. If the determination is affirmative, the flow advances to step S47. In step S47, the control unit 21 sets the error flag to ON, the processing of subroutine S36 is terminated, and the processing of subroutine S15 is terminated.

If the determination in step S42 is negative, the flow advances to step S43. In step S43, the control unit 21 determines whether the row-direction parameter RF is larger than half of the row-direction pixel count RW, namely, whether display in the equal ratio display mode is solely possible. If the determination is affirmative, the flow advances to step S49. In step S49, the control unit 21 determines the equal ratio display mode as the operation display mode, the processing of subroutine S36 is terminated, and the processing of subroutine S15 is terminated.

If the determination in step S43 is negative, the flow advances to step S44. In step S44, the control unit 21 determines whether the column-direction pixel count CW is equal to or larger than the minimum value CR1 of the column-direction parameter, and it is equal to or smaller than the maximum value CR2 of the column-direction parameter. That is, in step S44, it is determined whether the equal ratio display mode matches to the pixel count condition parameter [RF, CR (CR1, CR2)]. If the determination is affirmative, the flow advances to step S49. In step S49, the control unit 21 determines the equal ratio display mode as the operation display mode, the processing of subroutine S36 is terminated, and the processing of subroutine S15 is terminated.

If the determination in step S44 is negative, the flow advances to step S45. In step S45, the control unit 21 determines whether the half of the column-direction pixel count CW is equal to or larger than the minimum value CR1 of the column-direction parameter, and it is equal to or smaller than the maximum value CR1 of the column-direction parameter. That is, in step S45, it is determined whether the two times magnified ratio display mode matches to the pixel count condition parameter [RF, CR (CR1, CR2)]or not. If the determination is negative, namely, if it is determined that the display unit 13 has a sufficient display capability, but its pixel configuration neither matches to the equal ratio display mode nor the two times magnified ratio display from the viewpoint of the pixel count condition parameter [RF, CR (CR1, CR2)], the flow advances to step S49. In step S49, the control unit 21 determines the equal ratio display mode as the operation display mode, the processing of subroutine S36 is terminated, and the processing of subroutine S15 is terminated.

If the determination in step S45 is affirmative, namely, if it is determined that the pixel configuration of the display unit 13 matches to only the two times magnified ratio display mode from the viewpoint of the pixel count condition parameter [RF, CR (CR1, CR2)], the flow advances to step S48. In step S48, the control unit 21 determines the two times magnified ratio display mode as the operation display mode, the processing of subroutine S36 is terminated, and the processing of subroutine S15 is terminated.

Referring back to Fig. 8, if the determination in step S31 is negative, the flow advances to step S32. In step S32, the control unit 21 determines whether the column-direction parameter is designated by the fixed value, namely, whether the pixel count condition parameter [RP, CP] is the pixel count condition parameter [RR (RR1, RR2), CF] or not. If the determination is affirmative, the flow advances to subroutine S37.

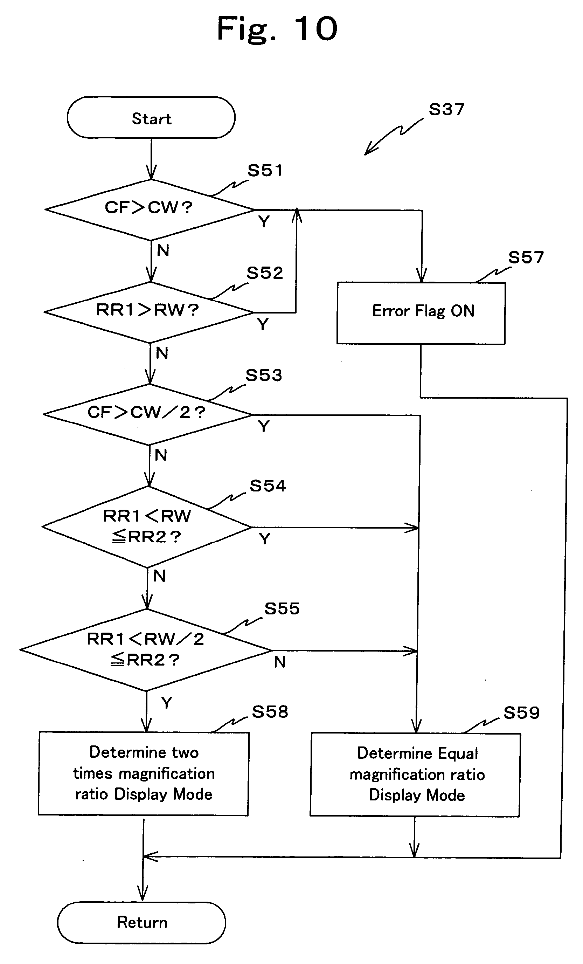

In subroutine S37, firstly, the control unit 21 determines whether the column-direction parameter CF is larger than the column-direction pixel count CW, namely, whether the application requires a display capability beyond that of the display unit 17 from the viewpoint of the pixel configuration in the column direction in step S51 shown in Fig. 10. If the determination is affirmative, the flow advances to step S57. In step S57, the control unit 21 sets the error flag to ON, the processing of subroutine S37 is terminated, and the processing of subroutine S15 is terminated.

If the determination in step S51 is negative, the flow advances to step S52. In step S52, the control unit 21 determines whether the minimum value RR1 of the row-direction parameter is larger than the row-direction pixel count RW, namely, whether the application requires a display capability beyond that of the display unit 17 from the viewpoint of the pixel configuration in the row direction. If the determination is affirmative, the flow advances to step S57. In step S57, the control unit 21 sets the error flag to ON, the processing of subroutine S37 is terminated, and the processing of subroutine S15 is terminated.

If the determination in step S52 is negative, the flow advances to step S53. In step S53, the control unit 21 determines whether the column-direction parameter CF is larger than half of the column-direction pixel count CW, namely, whether only display in the equal ratio display mode is possible or not. If the determination is affirmative, the flow advances to step S59. In step S59, the control unit 21 determines the equal ratio display mode as the operation display mode, the processing in subroutine S37 is terminated, and the processing in subroutine S15 is terminated.

If determination in step S53 is negative, the flow advances to step S54. In step S54, the control unit 21 determines two things: whether the row-direction pixel count RW is equal to or larger than the minimum value RR1 of the row-direction parameter, and it is equal to or smaller than the maximum value RR2 of the row-direction parameter. That is, in step S54, it is determined whether the equal ratio display mode matches to the pixel count condition parameter [RR (RR1, RR2), CF] or not. If the determination is affirmative, the flow advances to step S59. In step S59, the control unit 21 determines the operation display mode or the equal ratio display mode, the processing in subroutine S37 is terminated, and the processing in subroutine S15 is terminated.

If the determination in step S54 is negative, the flow advances to step S55. In step S55, the control unit 21 determines two things: whether half of the row-direction pixel count RW is equal to or larger than the minimum value RR1 of the row-direction parameter, and it is equal to or smaller than the maximum value RR2 of the row-direction parameter. That is, in step S55, it is determined whether the two times magnified ratio display mode matches the pixel count condition parameter [RR (RR1, RR2), CF] or not. If the determination is negative, namely, if it is determined that the display unit 13 has the sufficient display capability, but its pixel configuration neither matches the equal ratio display mode nor two times magnified display from the viewpoint of the pixel count condition parameter [RR (RR1, RR2), CF], the flow advances to step S59. In step S59, the control unit 21 determines the equal ratio display mode as the operation display mode, the processing in subroutine S37 is terminated, and the processing in subroutine S15 is terminated.

If the determination in step S55 is affirmative, namely, it means that the pixel configuration of the display unit 13 matches only the two times magnified ratio display mode from the viewpoint of the pixel count condition parameter [RR (RR1, RR2), CF], the flow advances to step S58. In step S58, the control unit 21 determines the two times magnified display mode as the operation display mode, the processing in subroutine S36 is terminated, and the processing in subroutine S15 is terminated.

Referring back to Fig. 8, if the determination in step S32 is negative, the control unit 21 determines that the pixel count condition parameter [RP, CP] is the pixel count condition parameter [RR (RR1, RR2), CR (CR1, CR2)]. Then the flow advances to subroutine S38.

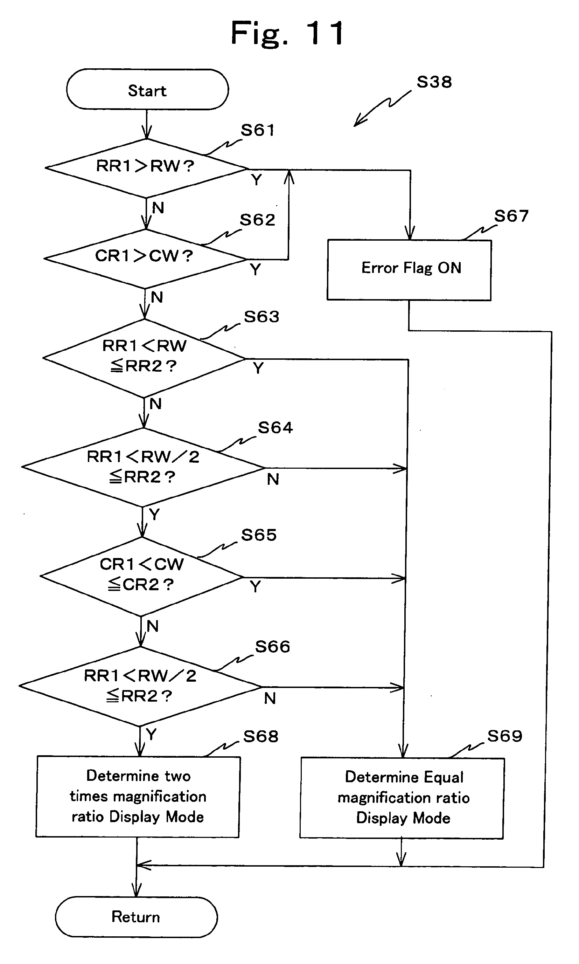

In subroutine S38 shown in step S61 in Fig. 11, the control unit 21 determines whether the minimum value RR1 of the row-direction parameter is larger than the row-direction pixel count RW or not, namely, whether the application requires the display capability beyond that of the display unit 17 from the viewpoint of the pixel configuration in the row direction. If the determination is affirmative, the flow advances to step S67. In step S67, the control unit 21 sets the error flag to ON, the processing in subroutine S38 is terminated, and the processing in subroutine S15 is terminated.

If the determination in step S61 is negative, the flow advances to step S62. In step S62, the control unit 21 determines whether the minimum value CR1 of the column-direction parameter is larger than the column-direction pixel count CW or not, namely, whether the application requires the display capability beyond that of the display unit 17 from the viewpoint of the pixel configuration in the column direction. If the determination is affirmative, the flow advances to step S67. In step S67, the control unit 21 sets the error flag to ON, the processing in subroutine S38 is terminated, and the processing in subroutine S15 is terminated.

If the determination in step S62 is negative, the flow advances to step S63. In step S63, the control unit 21 determines two things: whether the row-direction pixel count RW is equal to or larger than the minimum value RR1 of the row-direction parameter, and it is equal to or smaller than the maximum value RR2 of the row-direction parameter. That is, in step S54, it is determined whether the equal ratio display mode matches to the pixel count condition parameter [RR (RR1, RR2), CR (CR1, CR2)] from the viewpoint of the pixel configuration of the display unit 13 in the row direction. If the determination is affirmative, the flow advances to step S69. In step S69, the control unit 21 determines the equal ratio display mode as the operation display mode, the processing in subroutine S38 is terminated, and the processing in subroutine S15 is terminated.

If the determination in step S63 is negative, the flow advances to step S64. In step S64, the control unit 21 determines tow things: whether half of the row-direction pixel count RW is equal to or larger than the minimum value RR1 of the row-direction parameter, and it is equal to or smaller than the maximum value RR2 of the row-direction parameter. That is, in step S64, it is determined whether the two times magnified ratio display mode matches to the pixel count condition parameter [RR (RR1, RR2), CR (CR1, CR2)] from the viewpoint of the pixel configuration of the display unit 13 in the row direction. If the determination is negative, namely, if it is determined that the display unit 13 has the sufficient display capability, but its pixel configuration in the row direction neither matches to the equal ratio display mode nor two times magnified ratio display mode from the viewpoint of the pixel count condition parameter [RR (RR1, RR2), CR (CR1, CR2)], the flow advances to step S69. In step S69, the control unit 21 determines the most basic display mode, i.e., the equal ratio display mode as the operation display mode, the processing in subroutine S38 is terminated, and the processing in subroutine S15 is terminated.

If the determination in step S64 is affirmative, the flow advances to step S65. In step S65, the control unit 21 determines two things: whether the column-direction pixel count CW is equal to or larger than the minimum value CR1 of the column-direction parameter, and it is equal to or smaller than the maximum value CR2 of the column-direction parameter. That is, in step S65, it is determined whether the equal ratio display mode is adapted to the pixel count condition parameter [RR (RR1, RR2), CR (CR1, CR2)] from the viewpoint of the pixel configuration of the display unit 13 in the column direction. If the determination is affirmative, the flow advances to step S69. In step S69, the control unit 21 determines the equal display mode as the operation display mode, the processing in subroutine S38 is terminated, and the processing in subroutine S15 is terminated.

If the determination in step S65 is negative, the flow advances to step S66. In step S66, the control unit 21 determines two things: whether half of the column-direction pixel count CW is equal to or larger than the minimum value CR1 of the row-direction parameter, and it is equal to or smaller than the maximum value CR2 of the column-direction parameter. That is, in step S66, it is determined whether the two times magnified ratio display mode matches to the pixel count condition parameter [RR (RR1, RR2), CR (CR1, CR2)] from the viewpoint of the pixel configuration of the display unit 13 in the column direction. If the determination is negative, namely, if it is determined that the display unit 13 has the sufficient display capability, but its pixel configuration in the column direction neither matches to the equal ratio display mode nor two times magnified ratio display mode from the viewpoint of the pixel count condition parameter [RR (RR1, RR2), CR (CR1, CR2)], the flow advances to step S69. In step S69, the control unit 21 determines the most basic display mode, i.e., the equal display mode as the operation display mode, the processing in subroutine S38 is terminated, and the processing in subroutine S15 is terminated.

If the determination in step S66 is affirmative, i.e., it is determined that the pixel configuration of the display unit 13 matches to only the two times magnified ratio display mode from the viewpoint of the pixel count condition parameter [RR (RR1, RR2), CR (CR1, CR2)], the flow advances to step S68. In step S68, the control unit 21 determines the two times magnified ratio display mode as the operation display mode, the processing in subroutine S36 is terminated, and the processing in subroutine S15 is terminated.

When the processing in subroutine S14 or the processing in subroutine S15 is thus terminated, the flow advances to step S16 shown in Fig. 6. In step S16, the control unit 21 determines whether the error flag is ON, thereby determining whether an error has occurred or not. If the determination is affirmative, the flow advances to step S18. In step S18, the control unit 21 executes error processing of displaying a message representing that the content in the application cannot be displayed on the pixel configuration of the display unit 13, and the display processing is terminated.

If the determination in step S16 is negative, the flow advances to step S17. In step S17, the control unit 21 designates, for the display control unit 25, the operation display mode determined by the operation display mode instruction DMD.

In step S19, the control unit 21 supplies the original pixel data PDT that is designated by the application to the display control unit 25. After receiving the original pixel data PDT, the display control unit 25 displays PDT on the display unit 13 according to the designated operation display mode, wherein respective PDT corresponds to display units. Thus, the display processing of the content comprised in the application by the cellular phone 10 is terminated.

As described above, in this embodiment, the condition of the number of pixels for operating the application on the display screen is read out to determine the operation display mode from the at least one of the display mode candidates having different magnification ratios including equal ratio, depending on the condition of the number of pixels for the application being operated on a display screen. The condition is necessary in executing the application and is described at the predetermined position of the application file stored in the storage device 23.

Then, the image designated by the application is displayed on the display means in the determined operation display mode. Hence, according to this embodiment, the content may be displayed in an appropriate form, matching the content to the display unit 13.

Alternatively, the magnification ratio in the embodiment is the same in both of the row direction and column direction. Accordingly, the displayed content may always be equal or similar to the created content. Since the right of integrity of the creator of the content can automatically be respected in principle, no permission from the creator need be taken into consideration, though it is necessary in transformation display.

The condition of the number of pixels for the application to be operated comprises both of the row-direction parameter and the column-direction parameter; wherein the row-direction parameter shows the condition of the number of pixels in the row direction, and the column-direction parameter shows the condition of the number of pixels in the column direction. When the row-direction parameter and column-direction parameter are designated by fixed values, one of the display modes having the highest enlargement magnification matches to the pixel count designation is determined as the operation display mode. Thus, the visibility of the displayed content may be properly ensured.

In the embodiment of the present invention, one of the modes that fits to the range designation having the lowest magnification ratio is determined as the operation display mode, when the row-direction parameter or the column-direction parameter is designated by the range. Accordingly, a variety of display forms may be chosen, depending on how the condition is designated by the fixed value designation of the row-direction parameter and the column-direction parameter, or other.

Alternatively, since the antenna 17 and transceiving unit are provided as the reception means for receiving the application file, a variety of contents comprised in the received application files may be displayed in the appropriate form, matching the contents to the display means.

The present invention is not limited to the above-described embodiment, and all kinds of changes and modifications can be made.

For example, in the above embodiment, two display mode candidates, namely, the equal ratio display mode and two times magnified ratio display mode are employed. However, only the equal ratio display mode may be prepared, or three or more modes including the equal ratio display mode may be prepared. The magnification ratio other than equal ratio can have optional values.

Furthermore, in the above embodiment, the one of the display modes having the lowest magnification ratio chosen form the adaptable magnification ratio is determined as the display mode, when the pixel count condition parameter contains range designation. In contrast, even when the pixel count condition parameter contains range designation, the one of the adaptable magnification ratio having the highest magnification ratio may be determined as the operation display mode, similar to the case that the pixel count condition parameter contains only fixed value designation. Alternatively, the operator may choose one of the display mode candidates having matching magnification ratio.

In the above embodiment, magnification ratios of the row-direction and the column-direction are the same. However, these ratios may be different, unless there is any infringement on the right of integrity of the creator of the content by taking a measure , for example, obtaining permission from the creator and so forth.

In the above embodiment, error check in the pixel count condition parameter and the error processing are executed in the content display processing. However, the error check and the error processing may be executed in reception processing of the application. In this case, the content display processing is performed assuming that the pixel count condition parameter of a given application has no error.

Furthermore, in the above embodiment, the present invention is applied to the cellular phone. However, the present invention can also be applied to any other device such as a personal computer, as a matter of course.

### INDUSTRIAL APPLICABILITY

As has been described in detail, the display processing method and display processing apparatus of the present invention may be applied to display processing for a display means such as the liquid crystal display device in which pixels are arrayed in the matrix in the row direction and the column direction.

## Claims

1. A display processing method executing display processing for display means in which pixels are arrayed in a matrix along a row direction and column direction, comprising steps of:
reading out a condition of the number of pixels for an application being operated in a display screen, the number being necessary when an application is executed and the condition being described at a predetermined position of an application file;
determining an operation display mode among at least one display mode candidate having different magnification ratios including equal ratio, depending on the condition of the number of pixels; and
displaying an image designated by the application on the display means, by using the operation display mode.

2. A display processing method according to claim 1, wherein the magnification ratios are equal in the row direction and the column direction.

3. A display processing method according to claim 1, wherein the condition of the number of pixels comprises both of a row pixel count condition and a column pixel count condition, wherein the row pixel count condition shows the number of pixels per length of the row direction and the column pixel count condition shows the number of pixels per length of the column direction.

4. A display processing method according to claim 3, wherein
the row pixel count condition is designated by either of the pixel count in the row direction or the pixel count range, in which the application can be operated, and
the column pixel count condition is designated from the group consisting of the pixel count in the column direction and the pixel count range, in which the application can be operated.

5. A display processing method according to claim 4, wherein when both of the row pixel count condition and the column pixel count condition are designated by the pixel count, one display mode candidate having a highest magnification ratio is determined as the operation display mode among at least one of display mode candidates adaptable to the pixel count designations in the determination step.

6. A display processing method according to claim 5, wherein when at least one of the row pixel count condition and the column pixel count condition is designated by the pixel count range, one display mode candidate having a lowest magnification ratio is determined as the operation display mode among at least one of display mode candidates adaptable to the pixel count designations the determination step.

7. A display processing method according to any one of claims 1 to 6, further comprising the step of receiving the application file.

8. A display processing apparatus comprising:
display means in which pixels are arrayed in a matrix along with a row direction and column direction;
determination means for determining an operation display mode among at least one of display mode candidates having different magnification ratios including equal ratio, depending on the condition of the number of pixel for the application being operated is read out, the number being necessary when the application is executed, the condition being described at a predetermined position of an application file; and
display device control means for displaying an image designated by the application on the display means, by using the operation display mode.

9. A display processing apparatus according to claim 8, wherein
the determination means determines one display mode candidate having a highest magnification ratio among at least one of the display mode candidates adaptable to the pixel count designations as the operation display mode, when a row pixel count condition is designated by the pixel count in the row direction and column pixel count condition is designated by a pixel count in the column direction; the row pixel count condition showing the condition of the number of pixels per length in the row direction, the column pixel count condition showing the number of pixels per length of the column direction, and the application can be operated in both of the conditions.

10. A display processing apparatus according to claim 9, wherein one display mode candidate having a lowest magnification ratio is determined as the operation display mode among at least one of the display mode candidates adaptable to the pixel count designation, when one of the row pixel count condition and the column pixel count condition is designated by a pixel count range, the row pixel count condition showing the condition of the number of pixels per length of the row direction and the column pixel count condition showing the condition of the number of pixels per length of the column direction.

11. A display processing apparatus according to any one of claims 8 to 10, further comprising reception means for receiving the application file.

12. A display processing apparatus according to claim 11, wherein said reception means comprises wireless communication means for executing wireless communication with a base station for a mobile communication network.
